# FASCICULE DE BREVET EUROPEEN

(11) **EP 2 240 054 B1**
(45) Date de publication et mention de la délivrance du brevet: **06.07.2011**
(21) Numéro de dépôt: 08872611.2
(22) Date de dépôt: 19.12.2008
(51) Int. Cl.: A47J 27/21, A47J 43/044

(54) **RECIPIENT CHAUFFANT ET DISPOSITIF CHAUFFANT POUR UN APPAREIL ELECTROMENAGER DE PREPARATION D'ALIMENTS ET/OU DE BOISSONS**
ERWÄRMUNGSBEHÄLTER UND ERWÄRMUNGSVORRICHTUNG FÜR EIN HAUSHALTSGERÄT FÜR DIE ZUBEREITUNG VON SPEISEN UND/ODER GETRÄNKEN
HEATING CONTAINER AND HEATING DEVICE FOR DOMESTIC APPLIANCE FOR PREPARING FOOD AND/OR BEVERAGES

(30) Priorité: 21.12.2007 FR 0709075
(43) Date de publication de la demande: 20.10.2010
(73) Titulaire: SEB S.A., 69130 Ecully (FR)
(72) Inventeur: GARRIGUES, Patrick, F-65260 Pierrefitte-Nestalas (FR); TOMPA, Carole, F-65000 Tarbes (FR)
(74) Mandataire: Cémeli, Eric Philippe Laurent
(86) Numéro de dépôt international: PCT/FR2008/001802
(87) Numéro de publication internationale: WO 2009/103904

(56) Documents cités:
- EP-A- 1 683 451
- EP-A- 1 859 717
- WO-A-02/07575
- WO-A-99/63789
- DE-U1- 20 213 139
- GB-A- 2 363 055

## Description

La présente invention concerne le domaine technique des appareils électroménagers de préparation d'aliments et/ou de boissons comportant un récipient associé à des moyens de chauffe.

La présente invention concerne plus particulièrement un récipient chauffant et un dispositif chauffant pour un appareil du type précité.

La présente invention concerne également un appareil électroménager de préparation d'aliments et/ou de boissons comportant un récipient chauffant.

Il est connu des documents US 3 220 450, DE 2 020 437, DE 3 507 276, DE 4 414 821, EP 0 963 726, EP 1 647 217, EP 1 733 664 de réaliser des appareils électroménagers de préparation d'aliments et/ou de boissons comportant un récipient associé à un siège chauffant ou à un socle chauffant. Une telle construction comporte l'inconvénient de présenter une inertie thermique importante, peu propice au pilotage précis de la température des aliments contenus dans le récipient. Une telle construction est également peu compatible avec l'utilisation de récipients différents dans un même appareil.

Il est connu des documents EP 0 432 625, US 6 318 247, DE 1 02 26940, US 2005 045671, CN 1 586 378 de réaliser des appareils électroménagers de préparation d'aliments et/ou de boissons comportant un récipient présentant des moyens de chauffe solidaires du fond du récipient. Une telle construction comporte l'inconvénient de ne proposer qu'un seul type de récipient pour l'appareil. De plus les documents EP 0 432 625, US 6 318 247, US 2005 045671, CN 1 586 378 proposent des moyens de chauffe de type élément chauffant blindé. De tels moyens de chauffe rendent difficiles la réalisation d'une chauffe précise et homogène. Le document DE 1 02 26940 propose des moyens de chauffe de type élément chauffant sérigraphié. Toutefois la nature métallique du récipient rend plus difficile la réalisation d'une chauffe précise.

Il est connu du document EP 1 733 664 de réaliser des appareils électroménagers de préparation d'aliments et/ou de boissons comportant des moyens de chauffe plongeant dans un récipient. Une telle construction comporte l'inconvénient de présenter des risques de surchauffe pour les aliments et/ou les boissons préparées, ainsi que des risques de brûlure pour l'utilisateur.

Un appareil selon le préambule de la revendication 1 est connu du document DE 2 02 13 139 U.

Un but de la présente invention est de simplifier la réalisation d'un récipient chauffant ou d'un dispositif chauffant pour un récipient d'un appareil électroménager de préparation d'aliments et/ou de boissons.

Un autre but de la présente invention est de proposer un récipient chauffant ou un dispositif chauffant pour un récipient d'un appareil électroménager de préparation d'aliments et/ou de boissons permettant de réaliser une chauffe plus efficace des aliments ou des boissons contenus dans le récipient de l'appareil.

Un autre but de la présente invention est de proposer un récipient chauffant ou un dispositif chauffant pour un récipient d'un appareil électroménager de préparation d'aliments et/ou de boissons permettant de réaliser une variété plus grande de préparations culinaires.

Un autre but de la présente invention est de proposer un récipient chauffant pour appareil électroménager de préparation d'aliments et/ou de boissons, comportant un dispositif chauffant du type précité.

Un autre but de la présente invention est de proposer un appareil électroménager de préparation d'aliments et/ou de boissons présentant un récipient chauffant du type précité.

Ces buts sont atteints avec un dispositif chauffant pour un récipient chauffant d'un appareil électroménager de préparation d'aliments et/ou de boissons, ledit dispositif chauffant comportant une partie annulaire solidarisée de manière annulaire avec une partie périphérique d'un fond chauffant, des moyens de maintien d'une paroi latérale annulaire amovible de récipient étant prévus sur ladite partie annulaire, du fait que ladite partie annulaire forme une paroi annulaire supérieure s'élevant à partir du fond chauffant. Cette disposition permet de simplifier l'assemblage de la paroi latérale annulaire amovible de récipient sur ladite partie annulaire. Ainsi la partie annulaire équipée de moyens de maintien d'une paroi latérale annulaire amovible de récipient constitue un élément intermédiaire entre ladite paroi latérale annulaire amovible de récipient et le fond chauffant. La partie annulaire fixée au fond chauffant permet de réaliser un accouplement mécanique avec la paroi latérale annulaire amovible de récipient. De plus la partie annulaire peut notamment en fonction des matériaux utilisés créer un frein thermique entre le fond chauffant et la paroi latérale annulaire amovible de récipient, ou au contraire assurer la diffusion des calories issues du fond chauffant vers la paroi latérale annulaire amovible de récipient. Ces dispositions permettent de réaliser un récipient chauffant d'appareil électroménager de préparation d'aliments et/ou de boissons présentant une configuration adaptée à la préparation à effectuer, tout en conservant une construction économique. En effet le dispositif chauffant proposé forme une embase de récipient pouvant être utilisée avec différentes parois latérales annulaires de forme et/ou de matières différentes. Ces dispositions permettent de réduire le coût de remise en état d'un récipient chauffant dont la paroi latérale annulaire est endommagée. Ces dispositions permettent également d'augmenter le nombre d'accessoires d'un appareil électroménager de préparation d'aliments et/ou de boissons chauffant, pour un coût peu élevé. Ces dispositions permettent également d'augmenter le nombre de versions d'appareils électroménagers de préparation d'aliments et/ou de boissons chauffants en conservant une construction standardisée pour la partie chauffante.

Avantageusement alors la partie annulaire est dépourvue de structure métallique reliée à la partie périphérique du fond chauffant. Pour une meilleure précision de chauffe il n'est pas nécessaire que la partie annulaire accumule fortement les calories et/ou dissipe fortement les calories et/ou transmette fortement les calories issues du fond chauffant vers la paroi latérale annulaire amovible de récipient. De ce fait, la partie annulaire peut être réalisée en matériau peu conducteur de chaleur, présentant une capacité calorifique peu élevée. Ainsi ladite partie annulaire forme un frein thermique évitant la dissipation des calories issues du fond chauffant.

Avantageusement alors au moins la portion de la partie annulaire reliant les moyens de maintien à la partie périphérique du fond chauffant est réalisée en matière plastique. Avantageusement alors, la partie annulaire est réalisée en matière plastique. En alternative, la partie annulaire peut notamment comporter une portion métallique telle qu'un habillage externe métallique.

Selon une forme de réalisation avantageuse, la partie annulaire comporte une pièce surmoulée autour du fond chauffant. Cette construction permet de réaliser de manière économique un assemblage durable et étanche de la partie annulaire avec la partie périphérique du fond chauffant.

Selon une forme de réalisation préférée le fond chauffant comporte une plaque portant un élément chauffant sérigraphié. Cette disposition permet de chauffer de manière plus uniforme le fond chauffant et de favoriser un pilotage plus précis de la température. Les éléments chauffants sérigraphiés présentent en outre l'avantage d'une faible émissivité par rayonnement.

Avantageusement, la plaque est réalisée en matériau peu conducteur de chaleur, par exemple en acier inoxydable ou en verre, plutôt qu'en aluminium. Ainsi le chauffage produit par le fond chauffant s'effectue essentiellement par conduction au travers de la plaque. Les calories sont diffusées essentiellement à travers l'épaisseur de la plaque vers le contenu du récipient, et non transversalement dans la plaque vers la périphérie de la plaque, ce qui contribue à diminuer les températures rencontrées dans la partie annulaire. La portion de la partie annulaire reliant les moyens de maintien à la partie périphérique du fond chauffant réalisée en matière plastique contribue également à diminuer l'effet radiateur.

Avantageusement, ladite partie annulaire s'étend en dessous du fond chauffant. Ainsi la partie annulaire peut servir de moyen d'appui. Avantageusement alors ladite partie annulaire forme une paroi annulaire inférieure s'étendant en dessous du fond chauffant.

Avantageusement alors, les moyens de maintien sont disposés sur la paroi annulaire supérieure. Cette disposition permet de simplifier l'assemblage de la paroi latérale annulaire du récipient avec la partie annulaire. Cette disposition permet aussi de simplifier la construction du récipient.

Alors, selon une forme de réalisation avantageuse, les moyens de maintien comportent une couronne de verrouillage par baïonnette montée mobile par rapport à la paroi annulaire supérieure. La paroi latérale annulaire du récipient peut ainsi être mise en place sans rotation par rapport au dispositif chauffant.

Alors, selon une autre forme de réalisation avantageuse, les moyens de maintien définissent un chemin hélicoïdal. En d'autres termes, les moyens de maintien peuvent comporter des filetages ou des portions de filetages prévu(e)s pour coopérer avec des conformations adaptées de la paroi latérale annulaire du récipient.

Selon une forme de réalisation, le fond chauffant présente des moyens de réception d'un outil de travail rotatif.

Alors, selon un mode de réalisation, les moyens de réception d'un outil de travail rotatif comportent un élément d'entraînement. L'outil de travail rotatif peut être fixé à la partie supérieure de l'élément d'entraînement s'étendant au dessus du fond, ou au contraire être amovible par rapport à la partie supérieure de l'élément d'entraînement s'étendant au dessus du fond.

Alors, selon un autre mode de réalisation, les moyens de réception d'un outil de travail rotatif comportent un organe de guidage. L'organe de guidage peut notamment former un axe recevant l'extrémité inférieure de l'outil de travail ou une conformation recevant un élément d'appui de l'outil de travail rotatif, cet élément d'appui pouvant être libre en rotation par rapport à une partie principale de l'outil de travail rotatif. L'entraînement de l'outil de travail rotatif peut être un entraînement supérieur ou un entraînement inférieur.

Ces buts sont atteints également avec un récipient chauffant d'appareil électroménager de préparation d'aliments et/ou de boissons, comportant une embase et une paroi latérale annulaire de récipient montée amovible sur ladite embase, du fait que ladite embase forme un dispositif chauffant conforme à l'une au moins des caractéristiques précédentes. En d'autres termes, le dispositif chauffant est amovible par rapport à la paroi latérale de récipient.

Si désiré un joint d'étanchéité peut être agencé entre la paroi latérale annulaire amovible de récipient et le dispositif chauffant. Le joint d'étanchéité peut notamment être interposé entre la paroi latérale annulaire amovible de récipient et le dispositif chauffant. En alternative, le joint d'étanchéité peut notamment être intégré à la partie inférieure de la paroi latérale annulaire amovible de récipient, par exemple par surmoulage. Avantageusement alors, le joint repose sur la partie annulaire en périphérie du fond chauffant. Cette disposition permet de diminuer l'échauffement du joint, et contribue à améliorer la durabilité du joint.

Ces buts sont atteints également avec un récipient chauffant d'appareil électroménager de préparation d'aliments et/ou de boissons, du fait que ledit récipient chauffant présente une embase et une paroi latérale annulaire de récipient montée sur ladite embase, ladite embase comportant une partie annulaire solidarisée de manière annulaire avec une partie périphérique d'un fond chauffant, la paroi latérale annulaire de récipient étant fixée à la partie annulaire, ladite partie annulaire formant une paroi annulaire supérieure s'élevant à partir du fond chauffant. En d'autres termes, le dispositif chauffant est rendu solidaire et non démontable de la paroi latérale annulaire de récipient.

Ainsi la partie annulaire est fixée d'une part à la paroi latérale annulaire de récipient et d'autre part au fond chauffant. La partie annulaire constitue un élément intermédiaire entre la paroi latérale annulaire de récipient et le fond chauffant. En fonction des matériaux utilisés la partie annulaire peut notamment créer un frein thermique entre le fond chauffant et la paroi latérale annulaire de récipient, ou au contraire assurer la diffusion des calories issues du fond chauffant vers la paroi latérale annulaire de récipient.

Si désiré un joint d'étanchéité peut être agencé entre la paroi latérale annulaire de récipient et le dispositif chauffant. Le joint d'étanchéité peut notamment être interposé entre la paroi latérale annulaire de récipient et le dispositif chauffant. En alternative, le joint d'étanchéité peut notamment être intégré à la partie inférieure de la paroi latérale annulaire de récipient, par exemple par surmoulage. Avantageusement alors, le joint repose sur la partie annulaire en périphérie du fond chauffant. Cette disposition permet de diminuer l'échauffement du joint, et contribue à améliorer la durabilité du joint.

Avantageusement alors la partie annulaire est dépourvue de structure métallique reliée à la partie périphérique du fond chauffant. Les moyens de chauffe sont associés au fond chauffant et non à la partie annulaire. Pour une meilleure précision de chauffe il n'est pas nécessaire que la partie annulaire accumule fortement les calories et/ou dissipe fortement les calories et/ou transmette fortement les calories vers la paroi latérale annulaire de récipient. De ce fait, la partie annulaire peut être réalisée en matériau peu conducteur de chaleur, présentant une capacité calorifique peu élevée. Ainsi ladite partie annulaire forme un frein thermique évitant la dissipation des calories issues du fond chauffant.

Avantageusement alors au moins la portion de la partie annulaire reliant la paroi latérale annulaire de récipient à la partie périphérique du fond chauffant est réalisée en matière plastique. Avantageusement alors, la partie annulaire est réalisée en matière plastique. En alternative, la partie annulaire peut notamment comporter une portion métallique telle qu'un habillage externe métallique.

Selon une forme de réalisation avantageuse, la partie annulaire comporte une pièce surmoulée autour du fond chauffant. Cette construction permet de réaliser de manière économique un assemblage durable et étanche de la partie annulaire avec la partie périphérique du fond chauffant.

Selon une forme de réalisation préférée le fond chauffant comporte une plaque portant un élément chauffant sérigraphié. Cette disposition permet de chauffer de manière plus uniforme le fond chauffant et de favoriser un pilotage plus précis de la température. Les éléments chauffants sérigraphiés présentent en outre l'avantage d'une faible émissivité par rayonnement.

Avantageusement, la plaque est réalisée en matériau peu conducteur de chaleur, par exemple en acier inoxydable ou en verre, plutôt qu'en aluminium. Ainsi le chauffage produit par le fond chauffant s'effectue essentiellement par conduction au travers de la plaque. Les calories sont diffusées essentiellement à travers l'épaisseur de la plaque vers le contenu du récipient, et non transversalement dans la plaque vers la périphérie de la plaque, ce qui contribue à diminuer les températures rencontrées dans la partie annulaire. La portion de la partie annulaire reliant les moyens de maintien à la partie périphérique du fond chauffant réalisée en matière plastique contribue également à diminuer l'effet radiateur.

Avantageusement, ladite partie annulaire s'étend en dessous du fond chauffant. Ainsi la partie annulaire peut servir de moyen d'appui. Avantageusement alors ladite partie annulaire forme une paroi annulaire inférieure s'étendant en dessous du fond chauffant.

Avantageusement encore, ladite partie annulaire forme une paroi annulaire supérieure s'élevant à partir du fond chauffant. Cette disposition permet de simplifier l'assemblage de la paroi latérale annulaire amovible de récipient sur ladite partie annulaire.

Selon une forme de réalisation, le fond chauffant présente des moyens de réception d'un outil de travail rotatif.

Alors, selon un mode de réalisation, les moyens de réception d'un outil de travail rotatif comportent un élément d'entraînement. L'outil de travail rotatif peut être fixé à la partie supérieure de l'élément d'entraînement s'étendant au dessus du fond, ou au contraire être amovible par rapport à la partie supérieure de l'élément d'entraînement s'étendant au dessus du fond.

Alors, selon un autre mode de réalisation, les moyens de réception d'un outil de travail rotatif comportent un organe de guidage. L'organe de guidage peut notamment former un axe recevant l'extrémité inférieure de l'outil de travail ou une conformation recevant un élément d'appui de l'outil de travail rotatif, cet élément d'appui pouvant être libre en rotation par rapport à une partie principale de l'outil de travail rotatif. L'entraînement de l'outil de travail rotatif peut être un entraînement supérieur ou un entraînement inférieur.

Ces buts sont atteints également avec un appareil électroménager de préparation d'aliments et/ou de boissons comprenant un récipient chauffant selon l'une au moins des caractéristiques précédentes.

Ces buts sont atteints également avec un ensemble d'accessoires d'appareil électroménager de préparation d'aliments et/ou de boissons, comportant une embase et au moins deux parois latérales annulaires de récipient susceptibles d'être montées sur ladite embase, du fait que ladite embase forme un dispositif chauffant conforme à l'une au moins des caractéristiques précédentes.

Si désiré un joint d'étanchéité peut être agencé entre la paroi latérale annulaire amovible de récipient et le dispositif chauffant. Le joint d'étanchéité peut notamment être interposé entre la paroi latérale annulaire amovible de récipient et le dispositif chauffant. En alternative, le joint d'étanchéité peut notamment être intégré à la partie inférieure de la paroi latérale annulaire amovible de récipient, par exemple par surmoulage. Avantageusement alors, le joint repose sur la partie annulaire en périphérie du fond chauffant. Cette disposition permet de diminuer l'échauffement du joint, et contribue à améliorer la durabilité du joint.

Avantageusement encore, ledit ensemble d'accessoires d'appareil électroménager de préparation d'aliments et/ou de boissons comporte deux parois latérales annulaires de récipient de géométries différentes. Cette disposition permet d'obtenir des récipients mieux adaptés aux préparations à réaliser.

Avantageusement encore, ledit ensemble d'accessoires d'appareil électroménager de préparation d'aliments et/ou de boissons comporte deux parois latérales annulaires de récipient réalisées dans des matières différentes. Cette disposition permet aussi d'obtenir des récipients mieux adaptés aux préparations à réaliser.

Ces buts sont atteints également avec un appareil électroménager de préparation d'aliments et/ou de boissons comprenant un récipient chauffant réalisé à partir d'un ensemble d'accessoires d'appareil électroménager de préparation d'aliments et/ou de boissons selon l'une des caractéristiques précédentes.

Selon une forme de réalisation, ledit appareil électroménager de préparation d'aliments et/ou de boissons comprend un outil de travail rotatif disposé dans ledit récipient chauffant, et un boîtier comportant des moyens d'entraînement de l'outil de travail rotatif. Le récipient chauffant peut notamment être disposé sur le boîtier ou sous le boîtier.

L'invention sera mieux comprise à l'étude de deux exemples de réalisation et de deux variantes, pris à titre nullement limitatif, illustrés dans les figures annexées, dans lesquelles :
- la figure 1 est une vue en perspective d'un premier exemple de réalisation d'un appareil électroménager de préparation d'aliments et/ou de boissons comprenant un récipient chauffant comportant un dispositif chauffant selon l'invention,
- la figure 2 est une vue en perspective et en éclaté du récipient chauffant illustré sur la figure 1, montrant mieux le dispositif chauffant,
- la figure 3 est une vue en perspective d'un fond chauffant appartenant au dispositif chauffant illustré sur les figures 1 et 2,
- la figure 4 est une vue du dispositif chauffant illustré sur les figures 1 et 2 après surmoulage d'une partie annulaire et d'un noyau central sur le fond chauffant illustré sur la figure 3,
- la figure 5 est une vue du dispositif chauffant illustré sur les figures 1 et 2, après ajout d'un connecteur sur le fond chauffant tel qu'illustré sur la figure 4,
- la figure 6 est une vue du dispositif chauffant illustré sur les figures 1 et 2, après ajout de matériau polymère pour recouvrir le fond chauffant tel qu'illustré sur la figure 5,
- la figure 7 est une vue en perspective d'un élément de récipient adapté pour une utilisation avec le dispositif chauffant illustré sur la figure 6,
- la figure 8 est une vue en perspective d'un autre élément de récipient adapté pour une utilisation avec le dispositif chauffant illustré sur la figure 6,
- la figure 9 est une vue en coupe de l'élément de récipient illustré sur la figure 8, assemblé avec le dispositif chauffant illustré sur la figure 6,
- la figure 10 est une vue en coupe de l'élément de récipient illustré sur la figure 8, assemblé sur une variante de réalisation du dispositif de chauffant illustré sur la figure 6,
- la figure 11 est une vue en perspective et en éclaté d'un deuxième exemple de réalisation d'un appareil électroménager de préparation d'aliments et/ou de boissons comprenant un récipient chauffant comportant un dispositif chauffant selon l'invention,
- la figure 12 est une vue en coupe du récipient chauffant illustré sur la figure 11, montrant mieux le dispositif chauffant,
- la figure 13 est une vue en coupe d'une variante de réalisation du récipient chauffant illustré sur les figures 11 et 12, comportant un dispositif chauffant selon l'invention.

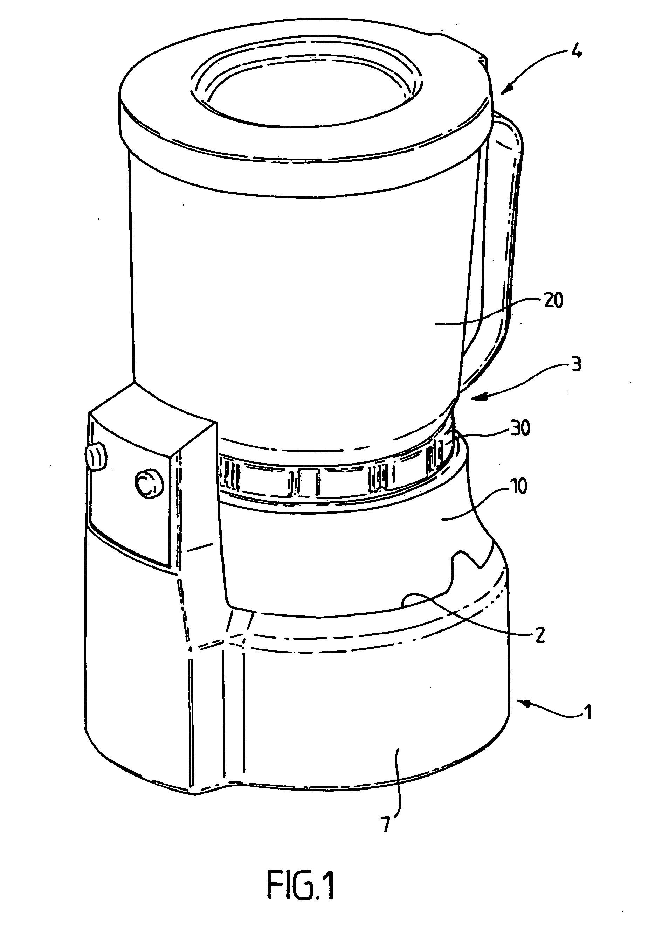

L'appareil électroménager de préparation d'aliments et/ou de boissons illustré sur la figure 1 comporte une base 1 formant un socle 2 recevant un récipient chauffant 3. Le récipient chauffant 3 est associé à un couvercle 4.

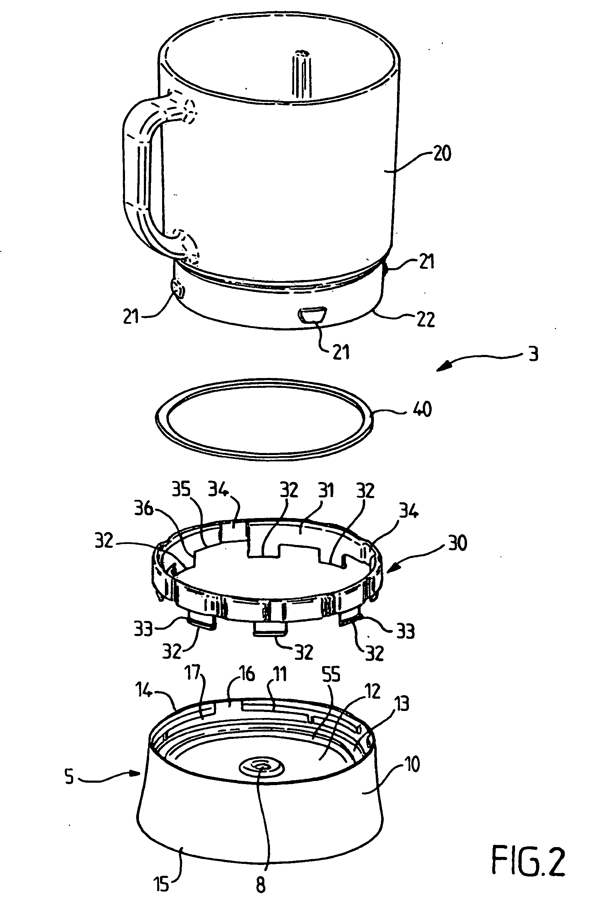

La figure 2 illustre le récipient chauffant 3 montré sur la figure 1. Le récipient chauffant 3 comporte une embase 10 et une paroi latérale annulaire 20 de récipient montée amovible sur l'embase 10. L'embase 10 comporte une partie annulaire 11 entourant un fond chauffant 12. La partie annulaire 11 est assemblée avec le fond chauffant 12. L'embase 10 peut comporter un outil de travail rotatif, non représenté sur la figure 2. A cet effet le fond chauffant 12 présente une ouverture axiale 8.

La partie annulaire 11 comporte une collerette annulaire interne 13. Le fond chauffant 12 est relié à la collerette annulaire interne 13.

La partie annulaire 11 s'étend au dessus du fond chauffant 12. La partie annulaire 11 forme une paroi annulaire supérieure 14 s'élevant à partir du fond chauffant 12. La paroi annulaire supérieure 14 est périphérique.

La partie annulaire 11 s'étend aussi en dessous du fond chauffant 12. La partie annulaire 11 forme une paroi annulaire inférieure 15 s'étendant en dessous du fond chauffant 12. La paroi annulaire inférieure 15 est périphérique.

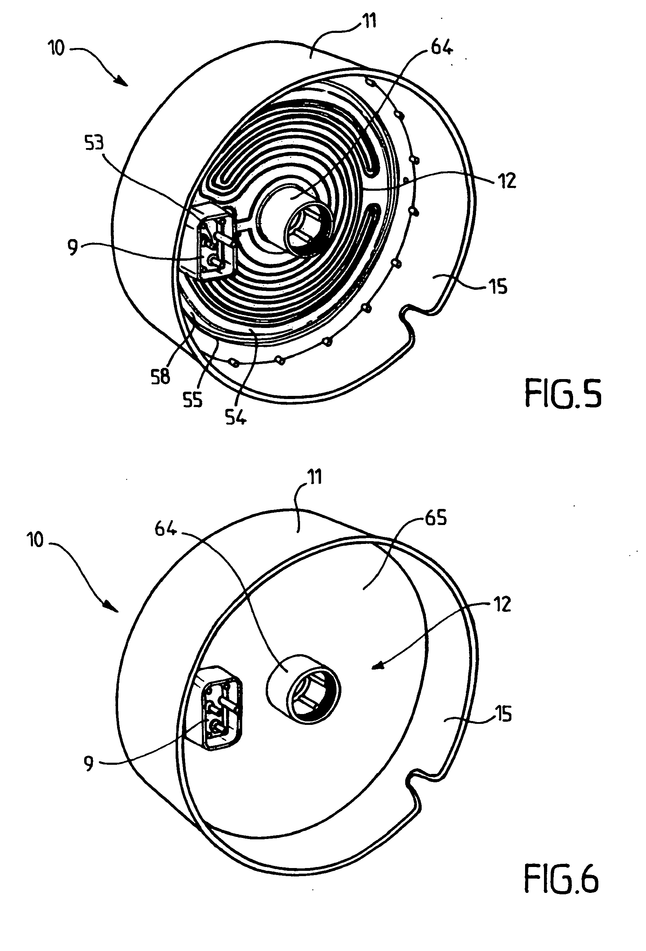

Des moyens de maintien 30 de la paroi latérale annulaire 20 amovible de récipient sont prévus sur la partie annulaire 11. Les moyens de maintien 30 sont prévus pour coopérer avec une face externe de la paroi latérale annulaire 20 amovible de récipient, tel que représenté sur la figure 6.

Les moyens de maintien 30 sont disposés sur la paroi annulaire supérieure 14. Plus particulièrement, les moyens de maintien 30 comportent une couronne de verrouillage 31 à baïonnette montée mobile par rapport à la paroi annulaire supérieure 14. A cet effet la couronne de verrouillage 31 comporte des pattes inférieures 32 munies de crochets externes 33 et la partie annulaire 11 présente des encoches longitudinales internes 16 débouchant dans une portion de rainure périphérique interne 17 de la paroi annulaire supérieure 14. La couronne de verrouillage 31 comporte des rainures longitudinales internes 34 débouchant entre deux pattes inférieures 32 à distance de l'une desdites pattes inférieures. Ainsi un bord inférieur 35 de la couronne de verrouillage 31 adjacent à l'une des rainures longitudinales internes 34 forme un moyen de retenue pour un ergot 21 ménagé sur la face externe de la partie inférieure de la paroi latérale annulaire 20 amovible de récipient. Une face latérale 36 de la patte inférieure adjacente audit bord inférieur 35 forme une butée latérale de verrouillage pour ledit ergot 21. La paroi latérale annulaire 20 comporte avantageusement au moins trois ergots 21, et de préférence quatre ergots 21, tel que représenté sur la figure 2.

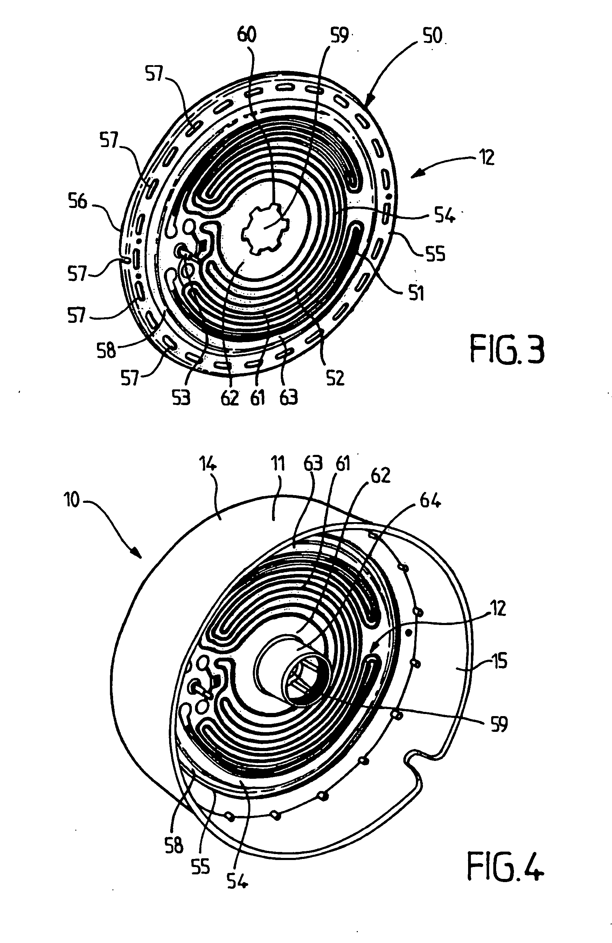

La partie annulaire 11 est avantageusement réalisée en matière plastique. Selon un mode de réalisation préféré illustré sur les figures 3 à 6 et 9, la partie annulaire 11 comporte une pièce surmoulée autour du fond chauffant 12.

Tel que mieux visible sur les figures 3 à 6, le fond chauffant 12 comporte une plaque 50 associée à des moyens de chauffe 51. Selon la forme de réalisation préférée visible sur les figures 3 à 5, les moyens de chauffe 51 sont formés par un élément chauffant sérigraphié 52 disposé sous la plaque 50.

Une ou plusieurs couches d'isolant diélectrique peuvent être déposées entre la plaque 50 et les pistes conductrices de l'élément chauffant sérigraphié 52 et/ou sur les pistes conductrices de l'élément chauffant sérigraphié 52.

Selon la forme de réalisation préférée visible sur les figures 3 à 5, la plaque 50 est avantageusement réalisée en acier inoxydable, par exemple en acier inoxydable de type F17, 403 ou 430.

La figure 3 illustre le fond chauffant 12 formé par la plaque 50 portant l'élément chauffant sérigraphié 52. L'élément chauffant sérigraphié 52 est réalisé sur la face inférieure de la plaque 50. La plaque 50 forme un disque. L'épaisseur de la plaque 50 est par exemple de 1,2 mm, pour faciliter la soudure d'un goujon de masse 53.

Le fond chauffant 12 présente une partie centrale 54 portant les moyens de chauffe 51 formés par l'élément chauffant sérigraphié 52. Le fond chauffant 12 présente une partie périphérique 55 comportant avantageusement un bord 56 relevé ainsi que des découpes 57. Le bord 56 relevé permet d'améliorer la rigidité dudit fond chauffant 12. Les découpes 57 permettent de faciliter l'accrochage de la partie annulaire 11 sur la partie périphérique 55. La plaque 50 présente avantageusement une zone emboutie 58 entre la partie centrale 54 et la partie périphérique 55 du fond chauffant 12. Les pistes résistives de l'élément chauffant sérigraphié 52 sont entourées par la zone emboutie 58 et s'étendent avantageusement à une distance d'au moins 3 mm de la zone emboutie 58.

Un passage central 59 est ménagé dans la plaque 50. Le passage central 59 peut présenter avantageusement des encoches 60 tel que visibles sur la figure 3 et/ou un bord relevé. Si désiré les encoches peuvent être relevées ou non. Le bord relevé peut être continu ou non. Les pistes résistives de l'élément chauffant sérigraphié 52 entourent le passage central 59.

Les pistes résistives de l'élément chauffant sérigraphié 52 sont ménagées sur une zone annulaire intermédiaire 61 du fond chauffant 12. La zone annulaire intermédiaire 61 entoure une zone centrale 62 du fond chauffant 12 dépourvue de pistes résistives. La zone annulaire intermédiaire 61 est entourée par une zone périphérique 63 du fond chauffant 12 également dépourvue de pistes résistives. La zone annulaire intermédiaire 61 et la zone centrale 62 sont ménagées sur la partie centrale 54 du fond chauffant 12. La zone périphérique 63 s'étend sur la périphérie de la partie centrale 54 ainsi que sur la zone emboutie 58 et sur la partie périphérique 55.

La figure 4 illustre l'embase 10 après surmoulage de la partie annulaire 11 autour du fond chauffant 12. La partie annulaire 11 est assemblée avec la partie périphérique 55 du fond chauffant 12. La partie annulaire 11 est réalisée en matériau(x) adapté(s) aux températures atteintes par la partie périphérique 55 du fond chauffant 12. La partie annulaire 11 peut par exemple être réalisée en polypropylène chargé verre, notamment pour les moyens de chauffe 51 présentant une puissance de l'ordre de 1000 W associés à la plaque 50 réalisée en acier inoxydable. La partie annulaire 11 peut aussi être réalisée en PBT, notamment pour des moyens de chauffe 51 présentant plus élevée, jusqu'à 3000 W, associés à la plaque 50 réalisée en acier inoxydable. La partie annulaire 11 de l'embase 10 est surmoulée autour de la partie centrale 54 du fond chauffant 12.

Plus particulièrement, la partie annulaire 11 est surmoulée sur la partie périphérique 55 autour de la zone emboutie 58. Ainsi la partie annulaire 11 est solidarisée de manière annulaire avec la partie périphérique 55 du fond chauffant 12. La zone périphérique 63 forme un frein thermique entre les moyens de chauffe 51 et la partie annulaire 11.

Les moyens de maintien 30 sont ménagés à l'intérieur de la paroi annulaire supérieure 14 de la partie annulaire 11, tel que visible sur la figure 2. La partie annulaire 11 forme un frein thermique annulaire réalisé en matériau non métallique entre les moyens de maintien 30 et la partie périphérique 55 du fond chauffant 12 et permet ainsi d'éviter la dispersion des calories issues du fond chauffant 12 vers la paroi latérale annulaire 20 amovible de récipient.

Un noyau central 64 est surmoulé dans la zone centrale 62 autour du passage central 59. Les encoches 60 (visibles sur la figure 3) facilitent l'accrochage du noyau central 64 à la partie centrale 54 du fond chauffant 12. La zone centrale 62 forme un frein thermique entre les moyens de chauffe 51 et le noyau central 64.

La figure 5 illustre l'embase 10 après montage d'un connecteur 9 sur la face inférieure du fond chauffant 12. Le connecteur 9 est agencé autour du goujon de masse 53.

Tel que bien visible sur les figures 3 à 5, l'élément chauffant sérigraphié 52 présente avantageusement une épargne au niveau du noyau central 64. En d'autres termes, au niveau du noyau central 64 le fond chauffant 12 est dépourvu de pistes résistives appartenant à l'élément chauffant sérigraphié 52. En effet, en l'absence d'une telle épargne la zone centrale de l'élément chauffant sérigraphié est usuellement l'une des zones les plus chaudes. Les pistes résistives de l'élément chauffant sérigraphié 52 s'étendent avantageusement à une distance d'au moins 3 mm du noyau central 64, par exemple à une distance de 10 mm.

La figure 6 illustre l'embase 10 après ajout de matériau polymère 65 pour recouvrir la face inférieure de la plaque 50 portant l'élément chauffant sérigraphié 52.

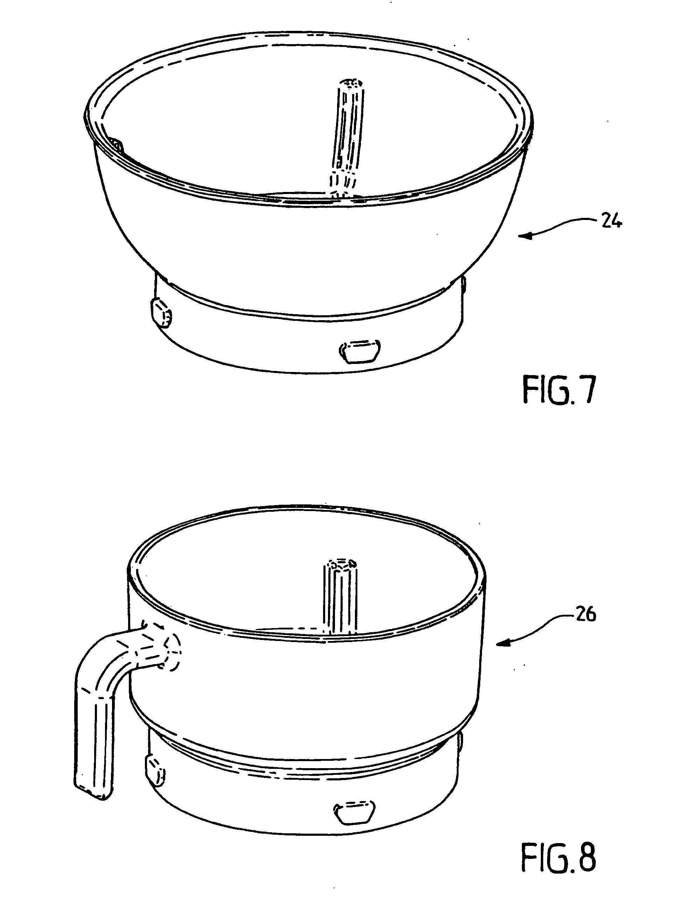

Les figures 7 et 8 illustrent d'autres parois latérales annulaires 24, 26 de récipient susceptibles d'être montées sur l'embase 10 à la place de la paroi latérale annulaire 20. Les parois latérales annulaires 20, 24, 26 de récipient sont de géométrie différentes. Les parois latérales annulaires 20, 24, 26 de récipient peuvent aussi être réalisées dans des matières différentes, par exemple en matière plastique, en acier inoxydable, en verre, voire en céramique.

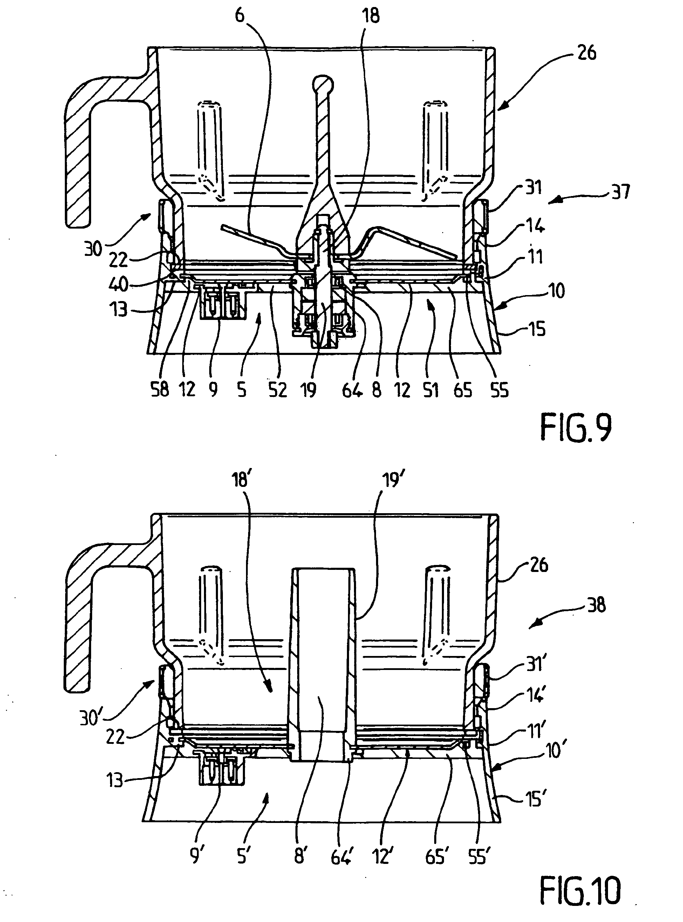

La figure 9 illustre un récipient chauffant 37 d'appareil électroménager de préparation d'aliments et/ou de boissons, comportant l'embase 10 illustrée sur les figures 1 à 6 et la paroi latérale annulaire 26 de récipient illustrée sur la figure 8, montée amovible sur ladite embase 10 au moyen de la couronne de verrouillage 31. La partie annulaire 11 forme une paroi externe du récipient chauffant 37. La paroi latérale annulaire 26 de récipient est montée à l'intérieur de la partie annulaire 11.

Le fond chauffant 12 présente des moyens de réception 18 d'un outil de travail rotatif 6. Les moyens de réception 18 de l'outil de travail rotatif 6 comportent un élément d'entraînement 19. L'élément d'entraînement 19 traverse l'ouverture axiale 8 du fond chauffant 12. L'élément d'entraînement 19 est monté dans le noyau central 64. L'outil de travail rotatif 6 peut être fixé à la partie supérieure de l'élément d'entraînement 19 ou au contraire être amovible par rapport à l'élément d'entraînement 19, tel que représenté sur la figure 9.

Selon la réalisation illustrée sur les figures 1, 2 et 9, un joint 40 est interposé entre l'embase 10 et un bord annulaire inférieur 22 de la paroi latérale annulaire 20, 26 amovible de récipient. Le joint 40 repose sur la partie annulaire 11 en périphérie du fond chauffant 12. Le joint 40 est mis en compression entre la partie annulaire 11 et le bord annulaire inférieur 22 de la paroi latérale annulaire 20, 26 amovible de récipient au moyen de la couronne de verrouillage 31. Plus particulièrement, le joint 40 repose sur la collerette annulaire interne 13. En alternative le joint 40 pourrait notamment être surmoulé sur le bord annulaire inférieur 22 de la paroi latérale annulaire 20, 24, 26 amovible de récipient. Le joint 40 est avantageusement disposé à distance des moyens de chauffe 51. A cet effet le joint 40 est disposé en périphérie des pistes conductrices de l'élément chauffant sérigraphié 52.

L'embase 10 peut être utilisée avec chacune des parois latérales annulaires 20, 24, 26. Ainsi l'embase 10 forme notamment un dispositif chauffant 5 pour le récipient chauffant 3 de l'appareil électroménager de préparation d'aliments et/ou de boissons illustré sur la figure 1, ou pour le récipient chauffant 37 illustré sur la figure 9.

L'appareil électroménager de préparation d'aliments et/ou de boissons illustré sur la figure 1 peut recevoir un récipient chauffant formé par l'embase 10 et l'une des parois latérales annulaires 20, 24, 26.

L'appareil électroménager de préparation d'aliments et/ou de boissons recevant le récipient chauffant 37 formé par l'embase 10 et la paroi annulaire 26 représentées sur la figure 9 comporte un outil de travail rotatif 6 disposé dans le récipient chauffant 37, et un boîtier 7 comportant des moyens d'entraînement de l'outil de travail rotatif 6, le boîtier 7 étant formé par la base 1 représentée sur la figure 1.

Les parois latérales annulaires 20, 24, 26 et l'embase 10 forment un ensemble d'accessoires d'appareil électroménager de préparation d'aliments et/ou de boissons.

La figure 10 illustre un récipient chauffant 38 d'appareil électroménager de préparation d'aliments et/ou de boissons, dans lequel la paroi latérale annulaire 26 illustrée sur les figures 8 et 9 est montée sur une embase 10' présentant un noyau central 64' formant une cheminée 8'.

L'embase 10' comporte une partie annulaire 11' entourant un fond chauffant 12'. La partie annulaire 11' est identique à la partie annulaire 11 de l'embase 10. La partie annulaire 11' forme une paroi externe du récipient chauffant 38. La partie annulaire 11' est solidarisée de manière annulaire avec la partie périphérique 55' du fond chauffant 12' de manière identique à l'assemblage de la partie annulaire 11 avec le fond chauffant 12 de l'embase 10. Le fond chauffant 12' est identique au fond chauffant 12 à l'exception du noyau central 64' remplaçant le noyau central 64. La partie annulaire 11' forme un frein thermique annulaire réalisé en matériau non métallique entre les moyens de maintien 30' et la partie périphérique 55' du fond chauffant 12'. L'embase 10' comporte un connecteur 9'. Du matériau polymère 65' recouvre avantageusement la face inférieure du fond chauffant 12'. L'embase 10' présente des moyens de réception 18' d'un outil de travail rotatif (non représenté sur la figure 6). Les moyens de réception 18' comportent un organe de guidage 19' prévu pour recevoir ledit outil de travail rotatif. L'organe de guidage 19' est formé par la cheminée 8' s'élevant du fond chauffant 12'.

Des moyens de maintien 30' de la paroi latérale annulaire 26 amovible de récipient sont prévus sur la partie annulaire 11'. Les moyens de maintien 30' sont disposés sur la paroi annulaire supérieure 14' de la partie annulaire 11'. Les moyens de maintien 30' comportent une couronne de verrouillage 31' à baïonnette montée mobile par rapport à la paroi annulaire supérieure 14'. La paroi latérale annulaire 26 de récipient est montée à l'intérieur de la partie annulaire 11'.

L'embase 10' peut être utilisée avec chacune des parois latérales annulaires 20, 24, 26. Ainsi l'embase 10' forme notamment un dispositif chauffant 5' pour le récipient chauffant 38 illustré sur la figure 10.

Les parois latérales annulaires 20, 24, 26 et l'embase 10' forment un ensemble d'accessoires d'appareil électroménager de préparation d'aliments et/ou de boissons.

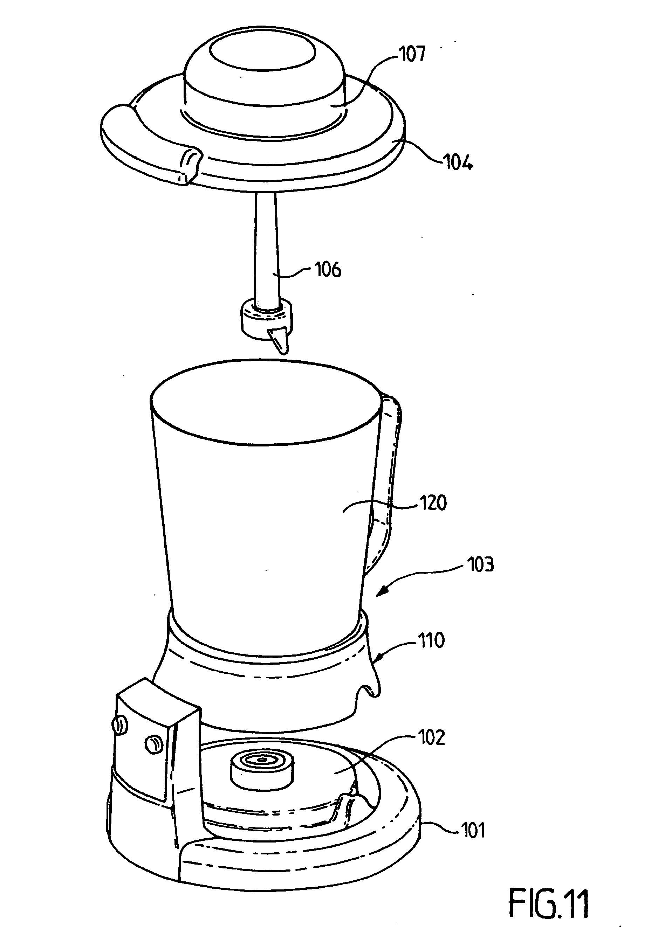

L'appareil électroménager de préparation d'aliments et/ou de boissons illustré sur la figure 11 comporte une base 101 formant un socle 102 recevant un récipient chauffant 103 associé à un couvercle 104, ainsi qu'un boîtier 107 comportant des moyens d'entraînement d'un outil de travail rotatif 106.

L'appareil électroménager de préparation d'aliments et/ou de boissons illustré sur la figure 11 diffère de l'appareil électroménager de préparation d'aliments et/ou de boissons illustré sur la figure 1 en ce que le boîtier 107 est formé par le couvercle 104.

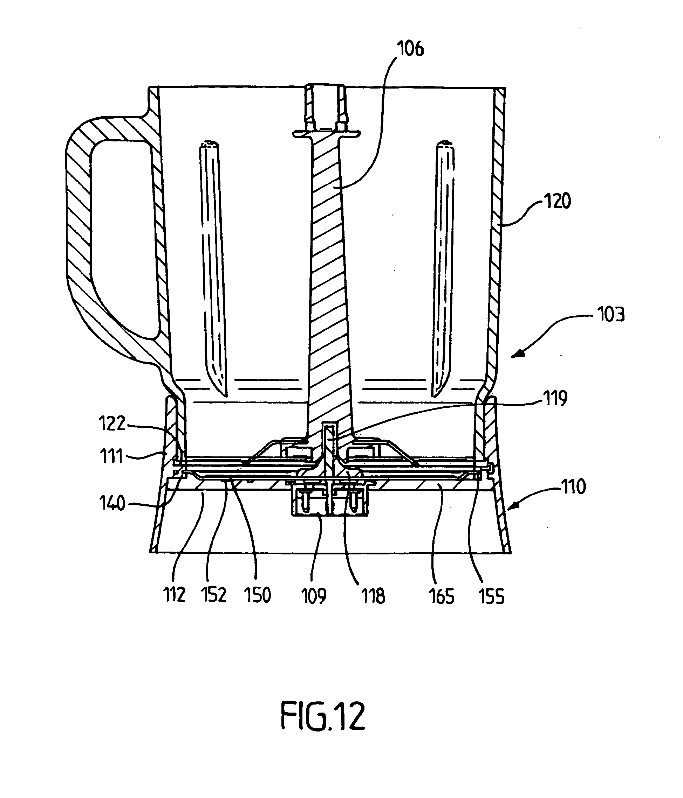

La figure 12 illustre le récipient chauffant 103 montré sur la figure 11, recevant l'outil de travail rotatif 106. Le récipient chauffant 103 présente une embase 110 et une paroi latérale annulaire 120 de récipient montée sur l'embase 110.

L'embase 110 comporte une partie annulaire 111 entourant un fond chauffant 112. La partie annulaire 111 forme une paroi externe du récipient chauffant 103. L'embase 110 comporte un connecteur 109 avantageusement agencé en position centrale. Le fond chauffant 112 comporte une plaque 150 portant un élément chauffant sérigraphié 152. La plaque 150 est avantageusement identique à la plaque 50. L'élément chauffant sérigraphié 152 peut aisément présenter des pistes résistives de dessin différent et/ou de puissance différente du dessin et/ou de la puissance des pistes résistives de l'élément chauffant sérigraphié 52. Du matériau polymère 165 recouvre avantageusement la face inférieure du fond chauffant 112. La partie annulaire 111 est assemblée avec la partie périphérique 155 du fond chauffant 112 de manière identique à l'assemblage de la partie annulaire 11 avec le fond chauffant 12 de l'embase 10. La partie annulaire 111 forme un frein thermique annulaire réalisé en matériau non métallique entre la paroi latérale annulaire 120 de récipient et la partie périphérique 155 du fond chauffant 112. La paroi latérale annulaire 120 de récipient est montée à l'intérieur de la partie annulaire 111.

L'embase 110 est dépourvue d'outil de travail rotatif. Le fond chauffant 112 présente des moyens de réception 118 de l'outil de travail rotatif 106, visibles sur la figure 12. Les moyens de réception 118 de l'outil de travail rotatif 106 comportent un organe de guidage 119. Tel que représenté sur la figure 12, l'organe de guidage 119 est formé par un axe prévu pour recevoir l'outil de travail rotatif 106.

A titre de variante, non représentée aux figures, l'organe de guidage 119 peut être formé par une conformation ménagée sur la face supérieure du fond chauffant 112, cette conformation recevant un élément d'appui de l'outil de travail rotatif. Si désiré, ledit élément d'appui peut être monté rotatif par rapport à la partie principale de l'outil de travail rotatif portant l'organe de travail ; ledit élément d'appui pouvant être immobilisé, notamment en rotation, par rapport à l'embase 110.

La paroi latérale annulaire 120 de récipient est fixée à la partie annulaire 111, par exemple par collage. Un joint 140 est avantageusement interposé entre l'embase 110 et un bord annulaire inférieur 122 de la paroi latérale annulaire 120 de récipient. La position du joint 140 est identique à la position du joint 40. Si désiré le joint 140 peut être surmoulé sur le bord annulaire inférieur 122 de la paroi latérale annulaire 120 de récipient.

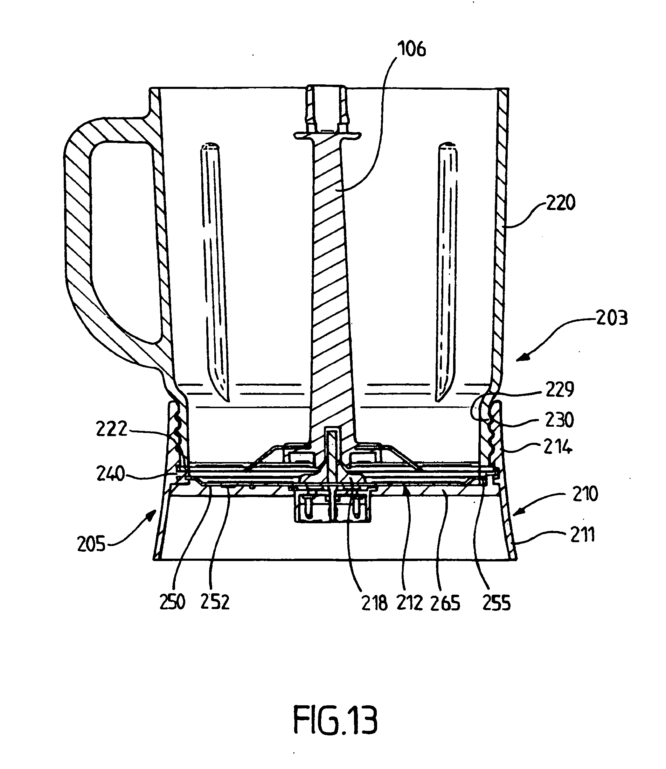

La figure 13 illustre un récipient chauffant 203 recevant l'outil de travail rotatif 106 illustré sur la figure 12. Le récipient chauffant 203 peut être utilisé avec la base 101, le couvercle 104 et l'outil de travail rotatif 106 de l'appareil électroménager de préparation d'aliments et/ou de boissons illustré sur la figure 11. Le récipient chauffant 203 comporte une embase 210 et une paroi latérale annulaire 220 de récipient montée sur l'embase 210.

Le récipient chauffant 203 illustré sur la figure 13 diffère du récipient chauffant 103 illustré sur les figures 11 et 12 en ce que la paroi latérale annulaire 220 de récipient est amovible. Ainsi l'embase 210 forme un dispositif chauffant 205 pour le récipient chauffant 203 de l'appareil électroménager de préparation d'aliments et/ou de boissons illustré sur la figure 11.

Le dispositif chauffant 205 comporte une partie annulaire 211 entourant un fond chauffant 212. La partie annulaire 211 forme une paroi externe du récipient chauffant 203. La partie annulaire 211 est assemblée avec la partie périphérique 255 du fond chauffant 212 de manière identique à l'assemblage de la partie annulaire 11 avec le fond chauffant 12 de l'embase 10. Le fond chauffant 212 est identique au fond chauffant 112 illustré sur la figure 12. La partie annulaire 211 forme un frein thermique annulaire réalisé en matériau non métallique entre les moyens de maintien 230 et la partie périphérique 255 du fond chauffant 212. Le fond chauffant 212 comporte une plaque 250 portant un élément chauffant sérigraphié 252. La plaque 250 est avantageusement identique à la plaque 50. L'élément chauffant sérigraphié 252 peut aisément présenter des pistes résistives de dessin différent et/ou de puissance différente du dessin et/ou de la puissance des pistes résistives de l'élément chauffant sérigraphié 52 et/ou de l'élément chauffant sérigraphié 152. Le fond chauffant 212 comporte des moyens de réception 218 de l'outil de travail rotatif 106. Les moyens de réception 218 comportent un organe de guidage 219. Du matériau polymère 265 recouvre avantageusement la face inférieure du fond chauffant 212.

Des moyens de maintien 230 de la paroi latérale annulaire 220 amovible de récipient sont prévus sur la partie annulaire 111. Les moyens de maintien 230 sont disposés sur la paroi annulaire supérieure 214 s'élevant à partir du fond chauffant 212. Les moyens de maintien 230 définissent un chemin hélicoïdal pour un assemblage par vissage avec des conformations 229 ménagées sur la paroi latérale annulaire 220 amovible de récipient. La paroi latérale annulaire 220 amovible de récipient est montée à l'intérieur de la partie annulaire 211.

Un joint 240 est avantageusement interposé entre l'embase 210 et un bord annulaire inférieur 222 de la paroi latérale annulaire 220 amovible de récipient. La position du joint 240 est identique à la position du joint 40.

Si désiré d'autres parois latérales annulaires de récipient (non représentées aux figures) peuvent être utilisées avec l'embase 210.

A titre de variante complémentaire pour les différents exemples de réalisation et leurs variantes, le fond chauffant 12 ; 12' ; 112 ; 212 et/ou la partie annulaire 11 ; 11' ; 111 ; 211 et/ou la paroi latérale annulaire 20 ; 24 ; 26 ; 120 ; 220 de récipient ne présente(nt) pas nécessairement une géométrie circulaire.

A titre de variante complémentaire pour les différents exemples de réalisation et leurs variantes, la plaque 50 ; 150 ; 250 n'est pas nécessairement réalisée en acier inoxydable, mais peut notamment être réalisée en aluminium ou en verre.

A titre de variante complémentaire pour les différents exemples de réalisation et leurs variantes, la plaque 50 ; 150 ; 250 peut présenter une périphérie ajourée et/ou découpée, pour faciliter la liaison avec la partie annulaire 11 ; 11';111;211.

A titre de variante complémentaire pour les différents exemples de réalisation et leurs variantes, la puissance du fond chauffant 12 ; 12' ; 112 ; 212 peut être adaptée aux utilisations envisagées, avec par exemple une puissance de chauffe de l'ordre de 500 W à 1200 W pour un appareil électroménager de préparation d'aliments de type robot de préparation culinaire comportant un outil de travail rotatif, et jusqu'à 3000 W pour un appareil électroménager de préparation de boissons de type bouilloire usuellement dépourvu d'outil de travail rotatif. Si désiré le fond chauffant 12 ; 12' ; 112 ; 212 peut comporter plusieurs niveaux de puissance.

A titre de variante complémentaire pour les différents exemples de réalisation et leurs variantes, les moyens de chauffe 51 ne sont pas nécessairement formés par un élément chauffant sérigraphié 52 ; 152 ; 252.

A titre de variante complémentaire pour les différents exemples de réalisation et leurs variantes, les différents moyens de réception d'un outil de travail rotatif peuvent être combinés indifféremment avec les différents moyens d'assemblage entre embase et paroi latérale de récipient.

A titre de variante complémentaire pour les différents exemples de réalisation et leurs variantes, le dispositif chauffant ou le récipient chauffant d'un appareil électroménager de préparation d'aliments et/ou de boissons selon l'invention peut être dépourvu de moyens de réception d'un outil de travail rotatif. L'appareil électroménager de préparation d'aliments et/ou de boissons selon l'invention peut alors si désiré être dépourvu de boîtier comportant des moyens d'entraînement d'un outil de travail rotatif.

A titre de variante complémentaire pour les différents exemples de réalisation et leurs variantes, la paroi latérale annulaire 20 ; 24 ; 26 ; 120 ; 220 de récipient n'est pas nécessairement montée à l'intérieur de la partie annulaire 11 ; 11' ; 111 ; 211.

A titre de variante complémentaire pour les différents exemples de réalisation et leurs variantes, la partie annulaire 11 ; 11'; 111 ; 211 peut notamment présenter un habillage extérieur métallique. Ainsi au moins la portion de la partie annulaire 11 ; 11'; 111 ; 211 reliant les moyens de maintien 30 ; 30' ; 230 ou le récipient 120 à la partie périphérique 55 ; 55' ; 155 ; 255 du fond chauffant 12 ; 12' ; 112 ; 212 est réalisée en matière plastique.

La présente invention n'est nullement limitée aux exemples de réalisation décrits et à leurs variantes, mais englobe de nombreuses modifications dans le cadre des revendications.

## Revendications

1. Dispositif chauffant (5 ; 5' ; 205) pour un récipient chauffant (3 ; 37 ; 38 ; 203) d'un appareil électroménager de préparation d'aliments et/ou de boissons, ledit dispositif chauffant (5 ; 5' ; 205) comportant une partie annulaire (11 ; 11' ; 211) solidarisée de manière annulaire avec une partie périphérique (55 ; 55' ; 255) d'un fond chauffant (12 ; 12' ; 212), des moyens de maintien (30 ; 30' ; 230) d'une paroi latérale annulaire (20 ; 24 ; 26 ; 220) amovible de récipient étant prévus sur ladite partie annulaire (11 ; 11' ; 211), **caractérisé en ce que** ladite partie annulaire (11 ; 11' ; 211) forme une paroi annulaire supérieure (14 ; 14' ; 214) s'élevant à partir du fond chauffant (12 ; 12' ; 212).

2. Dispositif chauffant (5 ; 5' ; 205) selon la revendication 1, **caractérisé en ce qu'**au moins la portion de la partie annulaire (11 ; 11'; 211) reliant les moyens de maintien (30 ; 30' ; 230) à la partie périphérique (55 ; 55' ; 255) du fond chauffant (12 ; 12' ; 212) est réalisée en matière plastique.

3. Dispositif chauffant (5 ; 5' ; 205) selon l'une des revendications 1 ou 2, **caractérisé en ce que** la partie annulaire (11 ; 11' ; 211) comporte une pièce surmoulée autour du fond chauffant (12 ; 12' ; 212).

4. Dispositif chauffant (5 ; 5' ; 205) selon l'une des revendications 1 à 3, **caractérisé en ce que** le fond chauffant (12 ; 12' ; 212) comporte une plaque (50 ; 250) portant un élément chauffant sérigraphié (52 ; 252).

5. Dispositif chauffant (5 ; 5' ; 205) selon l'une des revendications 1 à 4, **caractérisé en ce que** la partie annulaire (11 ; 11' ; 211) s'étend en dessous du fond chauffant (12 ; 12' ; 212).

6. Dispositif chauffant (5 ; 5' ; 205) selon l'une des revendications 1 à 5, **caractérisé en ce que** les moyens de maintien (30 ; 30' ; 230) sont disposés sur la paroi annulaire supérieure (14 ; 14' ; 214).

7. Dispositif chauffant (5 ; 5') selon la revendication 6, **caractérisé en ce que** les moyens de maintien (30 ; 30') comportent une couronne de verrouillage (31 ; 31') à baïonnette montée mobile par rapport à la paroi annulaire supérieure (14 ; 14').

8. Dispositif chauffant (205) selon la revendication 6, **caractérisé en ce que** les moyens de maintien (230) définissent un chemin hélicoïdal.

9. Dispositif chauffant (5 ; 5' ; 205) selon l'une des revendications 1 à 8, **caractérisé en ce que** le fond chauffant (12 ; 12' ; 212) présente des moyens de réception (18 ; 18' ; 218) d'un outil de travail rotatif (6 ; 206).

10. Dispositif chauffant (5) selon la revendication 9, **caractérisé en ce que** lesdits moyens de réception (18) comportent un élément d'entraînement (19).

11. Dispositif chauffant (5' ; 205) selon la revendication 9, **caractérisé en ce que** lesdits moyens de réception (18' ; 218) comportent un organe de guidage (19' ; 219).

12. Récipient chauffant (3 ; 37 ; 38 ; 203) d'appareil électroménager de préparation d'aliments et/ou de boissons, comportant une embase (10 ; 10' ; 210) et une paroi latérale annulaire (20 ; 24 ; 26 ; 220) de récipient montée amovible sur ladite embase (10 ; 10' ; 210), **caractérisé en ce que** ladite embase (10 ; 10' ; 210) forme un dispositif chauffant (5 ; 5' ; 205) selon l'une des revendications 1 à 11.

13. Récipient chauffant (103) d'appareil électroménager de préparation d'aliments et/ou de boissons, **caractérisé en ce qu'**il présente une embase (110) et une paroi latérale annulaire (120) de récipient montée sur ladite embase (110), ladite embase (110) comportant une partie annulaire (111) solidarisée de manière annulaire avec une partie périphérique (155) d'un fond chauffant (12 ; 12' ; 212), la paroi latérale annulaire (120) de récipient étant fixée à la partie annulaire (111), ladite partie annulaire (111) formant une paroi annulaire supérieure s'élevant à partir du fond chauffant (112).

14. Appareil électroménager de préparation d'aliments et/ou de boissons comprenant un récipient chauffant (3 ; 37 ; 38 ; 103 ; 203), **caractérisé en ce que** le récipient chauffant (3 ; 37 ; 38 ; 103 ; 203) est conforme à l'une des revendications 12 ou 13.

15. Ensemble d'accessoires d'appareil électroménager de préparation d'aliments et/ou de boissons, comportant une embase (10 ; 10' ; 110 ; 210) et au moins deux parois latérales annulaires (20 ; 24 ; 26 ; 110 ; 220) de récipient susceptibles d'être montées sur ladite embase (10 ; 10' ; 110 ; 210), **caractérisé en ce que** ladite embase (10 ; 10' ; 110 ; 210) forme un dispositif chauffant (5 ; 5' ; 105 ; 205) selon l'une des revendications 1 à 11.

16. Ensemble d'accessoires d'appareil électroménager de préparation d'aliments et/ou de boissons selon la revendication 15, **caractérisé en ce qu'**il comporte deux parois latérales annulaires (20 ; 24 ; 26 ; 110 ; 220) de récipient de géométries différentes.

17. Ensemble d'accessoires d'appareil électroménager de préparation d'aliments et/ou de boissons selon l'une des revendications 15 ou 16, **caractérisé en ce qu'**il comporte deux parois latérales annulaires (20 ; 24 ; 26 ; 110 ; 220) de récipient réalisées dans des matières différentes.

18. Appareil électroménager de préparation d'aliments et/ou de boissons comprenant un récipient chauffant (3 ; 37 ; 38 ; 103 ; 203), **caractérisé en ce que** le récipient chauffant (3 ; 37 ; 38 ; 103 ; 203) est réalisé à partir d'un ensemble d'accessoires d'appareil électroménager de préparation d'aliments et/ou de boissons selon l'une des revendications 15 à 17.

19. Appareil électroménager de préparation d'aliments et/ou de boissons selon l'une des revendications 14 ou 18, **caractérisé en ce qu'**il comprend un outil de travail rotatif (6 ; 106 ; 206) disposé dans ledit récipient chauffant (3 ; 37 ; 38 ; 103 ; 203), et un boîtier (7 ; 107) comportant des moyens d'entraînement de l'outil de travail rotatif (6 ; 106 ; 206).

## Claims

1. A heating device (5; 5'; 205) for a heating container (3; 37; 38; 203) of a domestic appliance for preparing food and/or beverages, said heating device (5; 5'; 205) including an annular portion (11; 11'; 211) connected in an annular manner with a peripheral portion (55; 55'; 255) of a heating bottom (12; 12'; 212), a holding means (30; 30'; 230) for a removable annular side wall (20; 24; 26; 220) of the container being provided on said annular portion (11; 11'; 211), **characterised in that** said annular portion (11; 11'; 211) forms an upper annular wall (14; 14'; 214) rising from the heating bottom (12; 12'; 212).

2. A heating device (5; 5'; 205) according to claim 1, **characterised in that** at least that part of the annular portion (11; 11'; 211) connecting the holding means (30; 30'; 230) with the peripheral portion (55; 55'; 255) of the heating bottom (12; 12'; 212) is made of plastic.

3. A heating device (5; 5'; 205) according to one of claims 1 or 2, **characterised in that** the annular portion (11; 11'; 211) contains an over-moulded part around the heating bottom (12; 12'; 212).

4. A heating device (5; 5'; 205) according to one of claims 1 to 3, **characterised in that** the heating bottom (12; 12'; 212) comprises a plate (50; 250) carrying a screen-printed heating member (52; 252).

5. A heating device (5; 5'; 205) according to one of claims 1 to 4, **characterised in that** the annular portion (11; 11'; 211) extends below the heating bottom (12; 12'; 212).

6. A heating device (5; 5'; 205) according to one of claims 1 to 5, **characterised in that** the holding means (30; 30'; 230) is arranged on the upper annular wall (14; 14'; 214).

7. A heating device (5; 5') according to claim 6, **characterised in that** the holding means (30; 30') comprises a bayonet locking ring (31; 31') mounted movably in relation to the upper annular wall (14; 14').

8. A heating device (205) according to claim 6, **characterised in that** the holding means (230) defines a helical path.

9. A heating device (5; 5'; 205) according to one of claims 1 to 8, **characterised in that** the heating bottom (12; 12'; 212) has a means for receiving (18; 18'; 218) a rotary working tool (6; 206).

10. A heating device (5) according to claim 9, **characterised in that** said receiving means (18) comprises a driving member (19).

11. A heating device (5'; 205) according to claim 9, **characterised in that** said receiving means (18'; 218) comprises a guiding member (19'; 219).

12. A heating container (3; 37; 38; 203) of a domestic appliance for preparing food and/or beverages, comprising a base (10; 10'; 210) and a container annular side wall (20; 24; 26; 220) mounted removably on said base (10; 10'; 210), **characterised in that** said base (10; 10'; 210) forms a heating device (5; 5'; 205) according to one of claims 1 to 11.

13. A heating container (103) of a domestic appliance for preparing food and/or beverages, **characterised in that** it has a base (110) and a container annular side wall (120) mounted on said base (110), said base (110) comprising an annular portion (111) connected in an annular manner with a peripheral portion (155) of a heating bottom (12; 12'; 212), the container's annular side wall (120) being attached to the annular portion (111), said annular portion (111) forming an upper annular wall rising from the heating bottom (112).

14. A domestic appliance for preparing food and/or beverage comprising a heating container (3; 37; 38; 103; 203), **characterised in that** the heating container (3; 37; 38; 103; 203) conforms to one of claims 12 or 13.

15. A set of accessories of a domestic appliance for preparing food and/or beverages, comprising a base (10; 10'; 110; 210) and at least two container annular side walls (20; 24; 26; 110; 220) that can be mounted on said base (10; 10'; 110; 210), **characterised in that** said base (10; 10'; 110; 210) forms a heating device (5; 5'; 105; 205) according to one of claims 1 to 11.

16. A set of accessories of a domestic appliance for preparing food and/or beverages according to claim 15, **characterised in that** it comprises two container annular side walls (20; 24; 26; 110; 220) with different geometries.

17. A set of accessories of a domestic appliance for preparing food and/or beverages according to one of claims 15 or 16, **characterised in that** it comprises two container annular side walls (20; 24; 26; 110; 220) made of different materials.

18. A domestic appliance for preparing food and/or beverages comprising a heating container (3; 37; 38; 103; 203), **characterised in that** the heating container (3; 37; 38; 103; 203) is made of a set of accessories of a domestic appliance for preparing food and/or beverages according to one of claims 15 to 17.

19. A domestic appliance for preparing food and/or beverages according to one of claims 14 or 18, **characterised in that** it comprises a rotary working tool (6; 106; 206) arranged inside said heating container (3; 37; 38; 103; 203), and a housing (7; 107) comprising means for driving the rotary working tool (6; 106; 206).

## Patentansprüche

1. Heizvorrichtung (5; 5'; 205) für einen Heizbehälter (3; 37; 38; 203) eines Elektrohaushaltsgerätes für die Zubereitung von Lebensmitteln und/oder Getränken, wobei die Heizvorrichtung (5; 5'; 205) einen ringförmigen Teil (11; 11'; 211) umfasst, der in der Art eines Ringes mit einem umlaufenden Teil (55; 55'; 255) eines Heizbodens (12; 12'; 212) fest verbunden ist, wobei Haltemittel (30; 30'; 230) einer abnehmbaren, ringförmigen Behälterseitenwand (20; 24; 26; 220) auf dem ringförmigen Teil (11; 11'; 211) vorgesehen sind, **dadurch gekennzeichnet, dass** der ringförmige Teil (11; 11'; 211) eine obere ringförmige Wand (14; 14'; 214) bildet, die ausgehend vom Heizboden (12; 12'; 212) emporragt.

2. Heizvorrichtung (5; 5'; 205) nach Anspruch 1, **dadurch gekennzeichnet, dass** mindestens jener Abschnitt des ringförmigen Teils (11; 11'; 211), der die Haltemittel (30; 30'; 230) mit dem umlaufenden Teil (55; 55'; 255) des Heizbodens (12; 12'; 212) verbindet, aus Kunststoffmaterial hergestellt ist.

3. Heizvorrichtung (5; 5'; 205) nach einem der Ansprüche 1 oder 2, **dadurch gekennzeichnet, dass** der ringförmige Teil (11; 11'; 211) ein Stück umfasst, das um den Heizboden (12; 12'; 212) herumgeformt ist.

4. Heizvorrichtung (5; 5'; 205) nach einem der Ansprüche 1 bis 3, **dadurch gekennzeichnet, dass** der Heizboden (12; 12'; 212) eine Platte (50; 250) umfasst, die ein Siebdruck-Heizelement (52; 252) trägt.

5. Heizvorrichtung (5; 5'; 205) nach einem der Ansprüche 1 bis 4, **dadurch gekennzeichnet, dass** sich der ringförmige Teil (11; 11'; 211) unterhalb des Heizbodens (12; 12'; 212) erstreckt.

6. Heizvorrichtung (5; 5'; 205) nach einem der Ansprüche 1 bis 5, **dadurch gekennzeichnet, dass** die Haltemittel (30; 30'; 230) auf der oberen ringförmigen Wand (14; 14'; 214) angeordnet sind.

7. Heizvorrichtung (5; 5') nach Anspruch 6, **dadurch gekennzeichnet, dass** die Haltemittel (30; 30') einen Verriegelungskranz (31; 31') mit Bajonettverschluss umfassen, der in Bezug auf die obere ringförmige Wand (14; 14') beweglich befestigt ist.

8. Heizvorrichtung (205) nach Anspruch 6, **dadurch gekennzeichnet, dass** die Haltemittel (230) einen spiralförmigen Pfad definieren.

9. Heizvorrichtung (5; 5'; 205) nach einem der Ansprüche 1 bis 8, **dadurch gekennzeichnet, dass** der Heizboden (12; 12'; 212) Mittel zur Aufnahme (18; 18'; 218) eines drehenden Arbeitswerkzeuges (6; 206) aufweist.

10. Heizvorrichtung (5) nach Anspruch 9, **dadurch gekennzeichnet, dass** die Aufnahmemittel (18) ein Antriebselement (19) umfassen.

11. Heizvorrichtung (5'; 205) nach Anspruch 9, **dadurch gekennzeichnet, dass** die Aufnahmemittel (18'; 218) ein Führungselement (19'; 219) umfassen.

12. Heizbehälter (3; 37; 38; 203) eines Elektrohaushaltsgerätes für die Zubereitung von Lebensmitteln und/oder Getränken, umfassend einen Sockel (10; 10'; 210) und eine ringförmige Behälterseitenwand (20; 24; 26; 220), die abnehmbar auf dem Sockel (10; 10'; 210) befestigt ist, **dadurch gekennzeichnet, dass** der Sockel (10; 10'; 210) eine Heizvorrichtung (5; 5'; 205) nach einem der Ansprüche 1 bis 11 bildet.

13. Heizbehälter (103) eines Elektrohaushaltsgerätes für die Zubereitung von Lebensmitteln und/oder Getränken, **dadurch gekennzeichnet, dass** er einen Sockel (110) und eine ringförmige Behälterseitenwand (120) aufweist, die auf dem Sockel (110) befestigt ist, wobei der Sockel (110) einen ringförmigen Teil (111) umfasst, der in der Art eines Ringes mit einem umlaufenden Teil (155) eines Heizbodens (12; 12'; 212) fest verbunden ist, wobei die ringförmige Behälterseitenwand (120) am ringförmigen Teil (111) befestigt ist, wobei der ringförmige Teil (111) eine obere ringförmige Wand bildet, die ausgehend vom Heizboden (112) emporragt.

14. Elektrohaushaltsgerät für die Zubereitung von Lebensmitteln und/oder Getränken, umfassend einen Heizbehälter (3; 37; 38; 103; 203), **dadurch gekennzeichnet, dass** der Heizbehälter (3; 37; 38; 103; 203) einem der Ansprüche 12 oder 13 entspricht.

15. Einheit aus Zubehörteilen eines Elektrohaushaltsgerätes für die Zubereitung von Lebensmitteln und/oder Getränken, umfassend einen Sockel (10; 10'; 110; 210) und mindestens zwei ringförmige Behälterseitenwände (20; 24; 26; 110; 220), die auf dem Sockel (10; 10'; 110; 210) befestigt werden können, **dadurch gekennzeichnet, dass** der Sockel (10; 10'; 110; 210) eine Heizvorrichtung (5; 5'; 105; 205) nach einem der Ansprüche 1 bis 11 bildet.

16. Einheit aus Zubehörteilen eines Elektrohaushaltsgerätes für die Zubereitung von Lebensmitteln und/oder Getränken nach Anspruch 15, **dadurch gekennzeichnet, dass** sie zwei ringförmige Behälterseitenwände (20; 24; 26; 110; 220) mit unterschiedlichen Formen umfasst.

17. Einheit aus Zubehörteilen eines Elektrohaushaltsgerätes für die Zubereitung von Lebensmitteln und/oder Getränken nach einem der Ansprüche 15 oder 16, **dadurch gekennzeichnet, dass** sie zwei ringförmige Behälterseitenwände (20; 24; 26; 110; 220) umfasst, die aus unterschiedlichen Materialien hergestellt sind.

18. Elektrohaushaltsgerät für die Zubereitung von Lebensmitteln und/oder Getränken, umfassend einen Heizbehälter (3; 37; 38; 103; 203), **dadurch gekennzeichnet, dass** der Heizbehälter (3; 37; 38; 103; 203) aus einer Einheit aus Zubehörteilen eines Elektrohaushaltsgerätes für die Zubereitung von Lebensmitteln und/oder Getränken nach einem der Ansprüche 15 bis 17 hergestellt ist.

19. Elektrohaushaltsgerät für die Zubereitung von Lebensmitteln und/oder Getränken nach einem der Ansprüche 14 oder 18, **dadurch gekennzeichnet, dass** es ein drehendes Arbeitswerkzeug (6; 106; 206), das im Heizbehälter (3; 37; 38; 103; 203) angeordnet ist, und ein Gehäuse (7; 107) umfasst, das Antriebsmittel für das drehende Arbeitswerkzeug (6; 106; 206) umfasst.
